# EUROPEAN PATENT APPLICATION

(11) **EP 1 453 274 A2**
(43) Date of publication of application: **01.09.2004**
(21) Application number: 04004531.2
(22) Date of filing: 27.02.2004
(51) Int. Cl.: H04L 29/06

(54) **Content delivering system**

(30) Priority: 28.02.2003 JP 2003054154
(71) Applicant: MATSUSHITA ELECTRIC INDUSTRIAL CO., LTD., Kadoma-shi, Osaka 571-8501 (JP)
(72) Inventor: Yamamoto, Hiroshi, Yokohama-shi Kanagawa-ken, 222-0022 (JP); Onoue, Suenori, Machida-shi Tokyo-to, 194-0011 (JP); Itoh, Shin, Yokohama-shi Kanagawa-ken, 224-0006 (JP)
(74) Representative: Pautex Schneider, Nicole

(57) **Abstract**

Herein disclosed is a content delivering system, comprising: a delivery server (10) for delivering content data indicative of a predetermined content and a schedule for reproducing the content; and a content player (20) for receiving the content data delivered by the delivery server (10), and reproducing the predetermined content in accordance with the schedule on the basis of the content data at a content reproducing place, and in which the content player (20) is operative to collect voices in the vicinity of the content reproducing place; and transmit voice information data indicative of the voices thus collected in the vicinity of the content reproducing place.

## Description

### BACKGROUND OF THE INVENTION

### 1. Field of the Invention

The present invention relates to a content delivering system for delivering a content through the internet, and more particularly to a content delivering system comprising a delivery server for delivering a content and a content player for reproducing the content wherein the content player is operative to collect information representing the public awareness of and responses to the content.

### 2. Description of the Related Art

Up until now, there have been proposed a wide variety of content delivering systems each comprising a delivery server for delivering a predetermined content and a content player for reproducing the content at a content reproducing place such as for example a large display screen mounted on a building, an electric bulletin board, or the like. The conventional content delivering systems of this kind have so far been available for various advertisement media. One typical example of the conventional content delivering system thus proposed is disclosed in the Japanese Patent Laid-Open Publication No. 10-240205.

The role of the advertisement media is to let as many people as possible know and raise the public awareness of the content. The conventional content delivering system thus constructed as previously mentioned, however, encounters a drawback that the public awareness of and response to the content cannot be analyzed unless questionnaire surveys or telephone interviews are conducted by market researchers, thereby requiring enormous man-hours and expenses to evaluate the effect of the conventional content delivering system. Furthermore, during the questionnaire surveys or telephone interviews, people surveyed or interviewed tend to become nervous, thereby making it difficult for the market researchers to elicit their true opinions on the content.

### SUMMARY OF THE INVENTION

It is therefore an object of the present invention to provide a content delivering system which comprises a delivery server for delivering a predetermined content and a content player for reproducing the content wherein the content player is operative to collect information representing the public awareness of and responses to the content, thereby enabling to evaluate the effect of the content delivering system without enormous man-hours and expenses.

In accordance with a first aspect of the present invention, there is provided a content delivering system, comprising: a delivery server for delivering content data indicative of a predetermined content and a schedule for reproducing the content; and a content player for receiving the content data delivered by the delivery server, and reproducing the predetermined content in accordance with the schedule on the basis of the content data at a content reproducing place, and in which the content player is operative to collect voices in the vicinity of the content reproducing place; and transmit voice information data indicative of the voices thus collected in the vicinity of the content reproducing place.

In the aforementioned content delivering system, at least one of the delivery server and the content player may include voice converting means for converting the voices into character strings. The delivery server may include character string display means for displaying the character strings. The delivery server may include evaluation chart creating means for creating evaluation charts on the basis of the character strings. The delivery server may include evaluation chart display means for displaying the evaluation charts. The character strings may constitute a plurality of words, and the evaluation chart creating means may be operative to create the evaluation charts by counting the frequency of each of the words for a plurality of time zones.

In accordance with a second aspect of the present invention, there is provided a content delivering system, comprising: a delivery server for delivering content data indicative of a predetermined content and a schedule for reproducing the content; and a content player for receiving the content data delivered by the delivery server, and reproducing the predetermined content in accordance with the schedule on the basis of the content data at a content reproducing place, and in which the content player is operative to record images in the vicinity of the content reproducing place; and transmit image information data indicative of the images thus recorded in the vicinity of the content reproducing place.

In the aforementioned content delivering system, the delivery server may include image display means for displaying the images. The delivery server may include evaluation chart creating means for creating evaluation charts on the basis of the images. The delivery server may include evaluation chart display means for displaying the evaluation charts. The images may include thereon a plurality of people divided into a plurality of status groups, and the evaluation chart creating means may be operative to create the evaluation charts by counting the number of people for each of the status groups for a plurality of time zones.

In accordance with a third aspect of the present invention, there is provided a content delivering system, comprising: a delivery server for delivering content data indicative of a predetermined content and a schedule for reproducing the content; and a content player for receiving the content data delivered by the delivery server, and reproducing the predetermined content in accordance with the schedule on the basis of the content data at a content reproducing place, and in which the content player is operative to collect voices and record images in the vicinity of the content reproducing place; and transmit voice information data indicative of the voices thus collected and image information data indicative of the images thus recorded in the vicinity of the content reproducing place.

In the aforementioned content delivering system, the delivery server may include voice converting means for converting the voices into character strings, character string display means for displaying the character strings, and image display means for displaying the images. The delivery server may include first evaluation chart creating means for creating first evaluation charts on the basis of the character strings, and second evaluation chart creating means for creating second evaluation charts on the basis of the images. The character strings may constitute a plurality of words, the images may include thereon a plurality of people divided into a plurality of status groups, the first evaluation chart creating means may be operative to create the first evaluation charts by counting the frequency of each of the words for a plurality of time zones, and the second evaluation chart creating means may be operative to create the second evaluation charts by counting the number of people for each of the status groups for a plurality of time zones.

### BRIEF DESCRIPTION OF THE DRAWINGS

The present invention and many of the attendant advantages thereof will be better understood from the following detailed description when considered in connection with the accompanying drawings, wherein:
FIG. 1 is a block diagram of a first embodiment of the content delivering system according to the present invention;
FIG. 2 is a block diagram of a second embodiment of the content delivering system according to the present invention;
FIG. 3 is a block diagram of a third embodiment of the content delivering system according to the present invention;
FIG. 4 is a block diagram of a fourth embodiment of the content delivering system according to the present invention;
FIG. 5 is a block diagram of a fifth embodiment of the content delivering system according to the present invention;
FIG. 6 is a block diagram of a sixth embodiment of the content delivering system according to the present invention;
FIG. 7 is an example of an evaluation chart crated on the basis of character strings; and
FIG. 8 is an example of an evaluation chart created on the basis of images.

### DESCRIPTION OF THE PREFERRED EMBODIMENTS

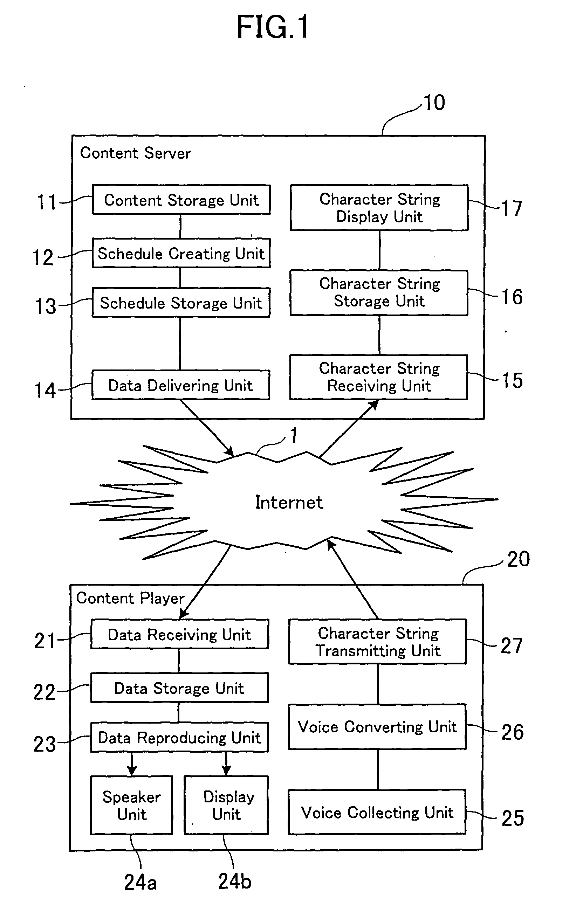

The following description will be directed to preferred embodiments of the content delivering system according to the present invention with reference to FIGS. 1 to 6.

The constitution of the first embodiments of the content delivering system according to the present invention will firstly be described in detail hereinafter with reference to FIG. 1.

Referring to FIG. 1 of the drawings, there is shown a first embodiment of a content delivering system comprising a delivery server 10 for delivering content data indicative of a predetermined content and a schedule for reproducing the content; and a content player 20 for receiving the content data delivered by the delivery server 10, and reproducing the predetermined content in accordance with the schedule on the basis of the content data at a content reproducing place. In the content delivering system, the content player 20 is operative to collect voices in the vicinity of the content reproducing place; and transmit voice information data indicative of the voices thus collected in the vicinity of the content reproducing place.

The delivery server 10 comprises a content storage unit 11 for storing therein content information data indicative of a predetermined content, a schedule creating unit 12 for creating a schedule for reproducing the content, a schedule storage unit 13 for storing therein schedule data indicative of the schedule created by the schedule creating unit 12, and a data delivering unit 14 for delivering content data indicative of the content and the schedule on the basis of the content information data stored in the content storage unit 11 and the schedule stored in the schedule storage unit 13 to the content player 20 through the internet 1.

The content player 20 comprises a data receiving unit 21 for receiving the content data delivered from the delivery server 10, a data storage unit 22 for storing therein the content data received by the data receiving unit 21, a data reproducing unit 23 for reproducing the content in accordance with the schedule on the basis of the content data stored in the data storage unit 22, a speaker unit 24a for audibly outputting the content and a display unit 24b for visually outputting the content. The speaker unit 24a and the display unit 24b are located at a content reproducing place such as for example an advertising tower. This means that the data reproducing unit 23 is operative to control the speaker unit 24a and the display unit 24b to have the speaker unit 24a audibly reproduce and the display unit 24b visually reproduce the content at the content reproducing place.

The content player 20 further comprises a voice collecting unit 25 for collecting voices spoken by people in the vicinity of the content reproducing place, a voice converting unit 26 for converting the voices collected by the voice collecting unit 25 into character strings, and a character string transmitting unit 27 for transmitting character string data indicative of the character strings converted by the voice converting unit 26 to the delivery server 10 through the intemet 1. The voice converting unit 26 constitutes voice converting means according to the present invention.

The delivery server 10 further comprises a character string receiving unit 15 for receiving character string data transmitted by the character string transmitting unit 27 of the content player 20, a character string storage unit 16 for storing therein the character string data, and a character string display unit 17 for displaying the character strings on the basis of the character string data stored in the character string storage unit 16. The character string display unit 17 constitutes character string display means according to the present invention.

As will be seen from the above, there has been described only one content player 20 in the present embodiment of the content delivering system according to the present invention for the purpose of simplifying the description and assisting in understanding about the whole operation of the content delivering system. In reality, the content delivering system according to the present invention may comprise a plurality of content players.

The delivery server 10 has a central processing unit, hereinlater referred to simply as a "CPU", not shown in FIG. 1 for controlling the whole operation of the delivery server 10. Similarly, the content player 20 has a central processing unit, hereinlater referred to simply as a "CPU", not shown in FIG. 1 for controlling the whole operation of the content player 20.

The following description will be directed to the process controlled by the CPUs of the delivery server 10 and the content player 20 to employ the method of controlling the content delivering system according to the present invention with no flowchart.

In the delivery server 10, the content storage unit 11 is operated to store therein content information data indicative of a content to be delivered to the content player 20. The content information data stored in the content storage unit 11 may be in the format of a still image file such as for example BMP, JPEG, or the like, and/or a moving image file such as for example MPEG or the like. The schedule creating unit 12 is operated to create a schedule for reproducing the content on the basis of the content data stored in the content storage unit 11. The term "schedule" herein used is intended to mean a time at which the content is reproduced. The schedule storage unit 13 is operated to store therein schedule data indicative of the schedule created by the schedule creating unit 12. The data delivering unit 14 is operated to deliver the content data through the internet 1. The content data is indicative of the content and the schedule for reproducing the content and created by the data delivering unit 14 on the basis of the content information data stored in the content storage unit 11 and the schedule stored in the schedule storage unit 13 before delivered to the content player 20.

In the content player 20, the data receiving unit 21 is operated to receive the content data delivered from the delivery server 10. The data storage unit 22 is operated to store therein the content data received by the data receiving unit 21. The data storage unit 22 may be constituted by, for example, a hard disk having storage areas. The data reproducing unit 23 is operated to reproduce the content in accordance with the schedule on the basis of the content data stored in the data storage unit 22. The content is audibly outputted by the speaker unit 24a and visually outputted by the display unit 24b at the content reproducing place.

Furthermore, in the content player 20, the voice collecting unit 25 is operated to collect voices spoken by people in the vicinity of the content reproducing place. The voice converting unit 26 is operated to convert the voices collected by the voice collecting unit 25 into character strings. The character string transmitting unit 27 is operated to transmit character string data indicative of the character strings converted by the voice converting unit 26 to the delivery server 10 through the intemet 1.

Furthermore, in the delivery server 10, the character string receiving unit 15 is operated to receive the character string data transmitted by the character string transmitting unit 27 of the content player 20. The character string storage unit 16 is operated to store therein the character string data. The character string display unit 17 is operated to display the character strings on the basis of the character string data stored in the character string storage unit 16. The character string display unit 17 may be constituted by, for example, a monitor.

The content server may be owned by an advertising agency. Alternatively, the character strings converted from the voices such as for example "cool", "uncool", "lovely", "unpretty", or the like collected at the content reproducing place may be provided to the advertising agency as assessments of the public awareness of and responses to the content.

From the foregoing description, it is to be understood that the first embodiment of the content delivering system according to the present invention comprising a delivery server for delivering content data indicative of a predetermined content and a schedule for reproducing the content; and a content player for receiving the content data delivered by the delivery server, and reproducing the predetermined content in accordance with the schedule on the basis of the content data at a content reproducing place, and in which the content player is operative to collect voices in the vicinity of the content reproducing place; and transmit voice information data indicative of the voices thus collected in the vicinity of the content reproducing place, can collect the public awareness of and responses to the content represented by the voices such as "cool", "uncool", "lovely", "unpretty", or the like spoken by the people at the content reproducing place, thereby enabling to evaluate the effect of the content delivering system without enormous man-hours and expenses.

While it has been described in the above that the content player comprises voice converting means, the voice converting means may be included in the delivery server in place of the content server as long as at least one of the delivery server and the content player includes voice converting means in the content delivering system according to the present invention.

Although there has been described in the above about the first embodiment of the content delivering system according to the present invention, the first embodiment may be replaced by second to sixth embodiments of the content delivering system in order to attain the objects of the present invention. The second to sixth embodiments of the content delivering system will then be described hereinlater.

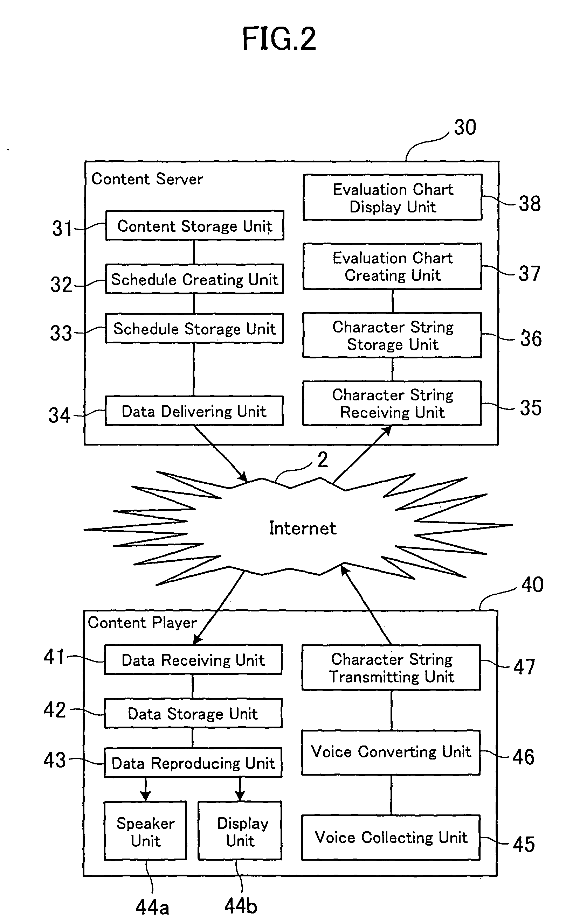

Referring to FIG 2 of the drawings, there is shown a second embodiment of a content delivering system comprising a delivery server 30 for delivering content data indicative of a predetermined content and a schedule for reproducing the content; and a content player 40 for receiving the content data delivered by the delivery server 30, and reproducing the predetermined content in accordance with the schedule on the basis of the content data at a content reproducing place. In the content delivering system, the content player 40 is operative to collect voices in the vicinity of the content reproducing place; and transmit voice information data indicative of the voices thus collected in the vicinity of the content reproducing place, and the delivery server 36 has evaluation chart creating means constituted by an evaluation chart creating unit 37 for creating evaluation charts on the basis of the character strings.

The delivery server 30 comprises a content storage unit 31 for storing therein content information data indicative of a predetermined content, a schedule creating unit 32 for creating a schedule for reproducing the content, a schedule storage unit 33 for storing therein schedule data indicative of the schedule created by the schedule creating unit 32, and a data delivering unit 34 for delivering content data indicative of the content and the schedule on the basis of the content information data stored in the content storage unit 31 and the schedule stored in the schedule storage unit 33 to the content player 40 through the internet 2.

The content player 40 comprises a data receiving unit 41 for receiving the content data delivered from the delivery server 30, a data storage unit 42 for storing therein the content data received by the data receiving unit 41, a data reproducing unit 43 for reproducing the content in accordance with the schedule on the basis of the content data stored in the data storage unit 42, a speaker unit 44a for audibly outputting the content and a display unit 44b for visually outputting the content. The speaker unit 44a and the display unit 44b are located at a content reproducing place such as for example an advertising tower. This means that the data reproducing unit 43 is operative to control the speaker unit 44a and the display unit 44b to have the speaker unit 44a audibly reproduce and the display unit 44b visually reproduce the content at the content reproducing place.

The content player 40 further comprises a voice collecting unit 45 for collecting voices spoken by people in the vicinity of the content reproducing place, a voice converting unit 46 for converting the voices collected by the voice collecting unit 45 into character strings, and a character string transmitting unit 47 for transmitting character string data indicative of the character strings converted by the voice converting unit 46 to the delivery server 30 through the intemet 2. The voice converting unit 46 constitutes voice converting means according to the present invention.

The delivery server 30 further comprises a character string receiving unit 35 for receiving character string data transmitted by the character string transmitting unit 47 of the content player 40, a character string storage unit 36 for storing therein the character string data, evaluation chart creating means constituted by an evaluation chart creating unit 37 for creating evaluation charts on the basis of the character strings indicated by the character string data stored in the character string storage unit 36, and evaluation chart display means constituted by an evaluation chart display unit 38 for displaying the evaluation charts created by the evaluation chart creating unit 37. The character strings indicated by the character string data stored in the character string storage unit 36 constitute a plurality of words such as for example "cool", "uncool", "lovely", "unpretty", or the like. The evaluation chart creating unit 37 is adapted to create the evaluation charts by counting the frequency of each of the words for a plurality of time zones.

As will be seen from the above, there has been described only one content player 40 in the present embodiment of the content delivering system according to the present invention for the purpose of simplifying the description and assisting in understanding about the whole operation of the content delivering system. In reality, the content delivering system according to the present invention may comprise a plurality of content players.

The delivery server 30 has a central processing unit, hereinlater referred to simply as a "CPU", not shown in FIG. 2 for controlling the whole operation of the delivery server 30. Similarly, the content player 40 has a central processing unit, hereinlater referred to simply as a "CPU", not shown in FIG 2 for controlling the whole operation of the content player 40.

The following description will be directed to the process controlled by the CPUs of the delivery server 30 and the content player 40 to employ the method of controlling the content delivering system according to the present invention with no flowchart.

In the delivery server 30, the content storage unit 31 is operated to store therein content information data indicative of a content to be delivered to the content player 40. The content information data stored in the content storage unit 31 may be in the format of a still image file such as for example BMP, JPEG, or the like, and/or a moving image file such as for example MPEG or the like. The schedule creating unit 32 is operated to create a schedule for reproducing the content on the basis of the content data stored in the content storage unit 31. The term "schedule" herein used is intended to mean a time at which the content is reproduced. The schedule storage unit 33 is operated to store therein schedule data indicative of the schedule created by the schedule creating unit 32. The data delivering unit 34 is operated to deliver the content data through the internet 2. The content data is indicative of the content and the schedule for reproducing the content and created by the data delivering unit 34 on the basis of the content information data stored in the content storage unit 31 and the schedule stored in the schedule storage unit 33 before delivered to the content player 40.

In the content player 40, the data receiving unit 41 is operated to receive the content data delivered from the delivery server 30. The data storage unit 42 is operated to store therein the content data received by the data receiving unit 41. The data storage unit 42 may be constituted by, for example, a hard disk having storage areas. The data reproducing unit 43 is operated to reproduce the content in accordance with the schedule on the basis of the content data stored in the data storage unit 42. The content is audibly outputted by the speaker unit 44a and visually outputted by the display unit 44b at the content reproducing place.

Furthermore, in the content player 40, the voice collecting unit 45 is operated to collect voices spoken by people in the vicinity of the content reproducing place. The voice converting unit 46 is operated to convert the voices collected by the voice collecting unit 45 into character strings. The character string transmitting unit 47 is operated to transmit character string data indicative of the character strings converted by the voice converting unit 46 to the delivery server 30 through the internet 2.

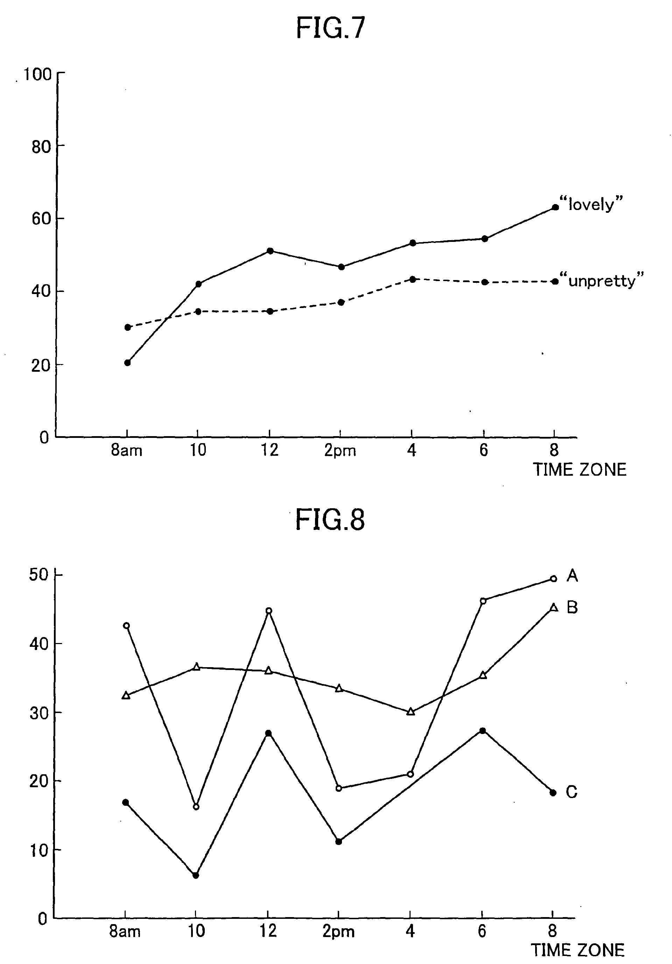

Furthermore, in the delivery server 30, the character string receiving unit 35 is operated to receive the character string data transmitted by the character string transmitting unit 47 of the content player 40. The character string storage unit 36 is operated to store therein the character string data. The evaluation chart creating unit 37 is operated to create evaluation charts on the basis of the character strings indicated by the character string data stored in the character string storage unit 36. More specifically, the character strings indicated by the character string data stored in the character string storage unit 36 constitute a plurality of words such as for example "cool", "uncool", "lovely", "unpretty", or the like. The evaluation chart creating unit 37 is operated to create the evaluation charts by counting the frequency each of the words spoken for a plurality of time zones. The evaluation chart created by the evaluation chart creating unit 37 may include any chart such as for example a bar chart, a pie chart, a line graph, a table, or the like. As an example of the evaluation chart, a line graph is shown in FIG. 7. The line graph shown in FIG 7 has a horizontal axis indicating the time zones and a vertical axis indicating the frequency of each of the words, e.g., "lovely" and "unpretty" spoken by people in the vicinity of the content reproducing place within each of the time zones. The evaluation chart display unit 38 is operated to display the evaluation charts created by the evaluation chart creating unit 37. The evaluation chart display unit 38 may be constituted by, for example, a monitor.

The content server may be owned by an advertising agency. Alternatively, the evaluation charts created by the evaluation chart creating unit 37 may be provided to the advertising agency as assessments of the public awareness of and responses to the content.

From the foregoing description, it is to be understood that the second embodiment of the content delivering system according to the present invention comprising a delivery server for delivering content data indicative of a predetermined content and a schedule for reproducing the content; and a content player for receiving the content data delivered by the delivery server, and reproducing the predetermined content in accordance with the schedule on the basis of the content data at a content reproducing place, and in which the content player includes a voice collecting unit 45 for collecting voices spoken by people in the vicinity of the content reproducing place, a voice converting unit 46 for converting the voices collected by the voice collecting unit 45 into character strings, and a voice converting unit 46 for converting the voices into character strings, and the delivery server includes an evaluation chart creating unit 37 for creating evaluation charts on the basis of the character strings, can visually represent the public awareness of and responses to the content represented by the voices such as "cool", "uncool", "lovely", "unpretty", or the like spoken by the people at the content reproducing place, thereby enabling to evaluate the effect of the content delivering system without enormous man-hours and expenses.

While it has been described in the above that the content player comprises voice converting means, the voice converting means may be included in the delivery server in place of the content server as long as at least one of the delivery server and the content player includes voice converting means in the content delivering system according to the present invention.

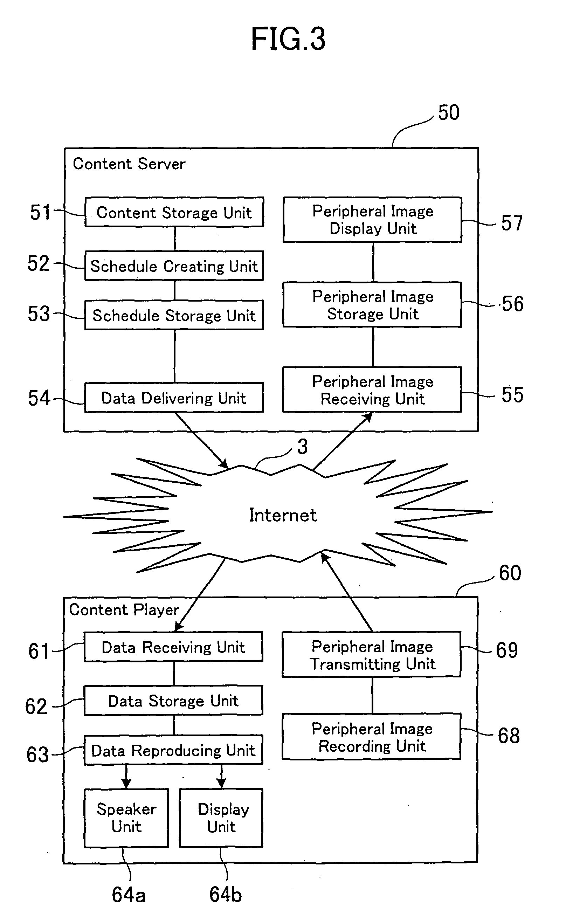

Referring to FIG. 3 of the drawings, there is shown a third embodiment of content delivering system comprising a delivery server 50 for delivering content data indicative of a predetermined content and a schedule for reproducing the content; and a content player 60 for receiving the content data delivered by the delivery server 50, and reproducing the predetermined content in accordance with the schedule on the basis of the content data at a content reproducing place. In the content delivering system, the content player 60 is operative to record images in the vicinity of the content reproducing place; and transmit image information data indicative of the images thus recorded in the vicinity of the content reproducing place.

The delivery server 50 comprises a content storage unit 51 for storing therein content information data indicative of a predetermined content, a schedule creating unit 52 for creating a schedule for reproducing the content, a schedule storage unit 53 for storing therein schedule data indicative of the schedule created by the schedule creating unit 52, and a data delivering unit 54 for delivering content data indicative of the content and the schedule on the basis of the content information data stored in the content storage unit 51 and the schedule stored in the schedule storage unit 53 to the content player 60 through the internet 3.

The content player 60 comprises a data receiving unit 61 for receiving the content data delivered from the delivery server 50, a data storage unit 62 for storing therein the content data received by the data receiving unit 61, a data reproducing unit 63 for reproducing the content in accordance with the schedule on the basis of the content data stored in the data storage unit 62, a speaker unit 64a for audibly outputting the content and a display unit 64b for visually outputting the content. The speaker unit 64a and the display unit 64b are located at a content reproducing place such as for example an advertising tower. This means that the data reproducing unit 63 is operative to control the speaker unit 64a and the display unit 64b to have the speaker unit 64a audibly reproduce and the display unit 64b visually reproduce the content at the content reproducing place.

The content player 60 further comprises a peripheral image recording unit 68 for recording images of people in the vicinity of the content reproducing place, and a peripheral image transmitting unit 69 for transmitting image information data indicative of the images thus recorded by the peripheral image recording unit 68 to the delivery server 50 through the internet 3.

The delivery server 50 further comprises a peripheral image receiving unit 55 for receiving the image information data delivered by the peripheral image transmitting unit 69 of the content player 60, a peripheral image storage unit 56 for storing therein the image information data received by the peripheral image receiving unit 55, and a peripheral image display unit 57 for displaying the images indicated by the image information data stored in the peripheral image storage unit 56. The peripheral image display unit 57 constitutes image display means of the delivery server according to the present invention.

As will be seen from the above, there has been described only one content player 60 in the present embodiment of the content delivering system according to the present invention for the purpose of simplifying the description and assisting in understanding about the whole operation of the content delivering system. In reality, the content delivering system according to the present invention may comprise a plurality of content players.

The delivery server 50 has a central processing unit, hereinlater referred to simply as a "CPU", not shown in FIG. 3 for controlling the whole operation of the delivery server 50. Similarly, the content player 60 has a central processing unit, hereinlater referred to simply as a "CPU", not shown in FIG. 3 for controlling the whole operation of the content player 60.

The following description will be directed to the process controlled by the CPUs of the delivery server 50 and the content player 60 to employ the method of controlling the content delivering system according to the present invention with no flowchart.

In the delivery server 50, the content storage unit 51 is operated to store therein content information data indicative of a content to be delivered to the content player 60. The content information data stored in the content storage unit 51 may be in the format of a still image file such as for example BMP, JPEG, or the like, and/or a moving image file such as for example MPEG or the like. The schedule creating unit 52 is operated to create a schedule for reproducing the content on the basis of the content data stored in the content storage unit 51. The term "schedule" herein used is intended to mean a time at which the content is reproduced. The schedule storage unit 53 is operated to store therein schedule data indicative of the schedule created by the schedule creating unit 52. The data delivering unit 54 is operated to deliver the content data through the internet 3. The content data is indicative of the content and the schedule for reproducing the content and created by the data delivering unit 54 on the basis of the content information data stored in the content storage unit 51 and the schedule stored in the schedule storage unit 53 before delivered to the content player 60.

In the content player 60, the data receiving unit 61 is operated to receive the content data delivered from the delivery server 50. The data storage unit 62 is operated to store therein the content data received by the data receiving unit 61. The data storage unit 62 may be constituted by, for example, a hard disk having storage areas. The data reproducing unit 63 is operated to reproduce the content in accordance with the schedule on the basis of the content data stored in the data storage unit 62. The content is audibly outputted by the speaker unit 64a and visually outputted by the display unit 64b at the content reproducing place.

Furthermore, in the content player 60, the peripheral image recording unit 68 is operated to record images of people in the vicinity of the content reproducing place. The peripheral image transmitting unit 69 is operated to transmit image information data indicative of the images thus recorded by the peripheral image recording unit 68 to the delivery server 50 through the intemet 3.

Furthermore, in the delivery server 50, the peripheral image receiving unit 55 is operated to receive the image information data delivered by the peripheral image transmitting unit 69 of the content player 60. The peripheral image storage unit 56 is operated to store therein the image information data received by the peripheral image receiving unit 55. The peripheral image display unit 57 is operated to display the images indicated by the image information data stored in the peripheral image storage unit 56. The peripheral image display unit 57 may be constituted by, for example, a monitor. The peripheral image display unit 57 constitutes image display means of the delivery server according to the present invention.

The content server may be owned by an advertising agency. Alternatively, the image information data recorded by the peripheral image recording unit 68 in the vicinity of the content reproducing place may be provided to the advertising agency as assessments of the public awareness of and responses to the content.

From the foregoing description, it is to be understood that the third embodiment of the content delivering system according to the present invention comprising a delivery server for delivering content data indicative of a predetermined content and a schedule for reproducing the content; and a content player for receiving the content data delivered by the delivery server, and reproducing the predetermined content in accordance with the schedule on the basis of the content data at a content reproducing place, and in which the content player is operative to record images in the vicinity of the content reproducing place; and transmit image information data indicative of the images thus recorded in the vicinity of the content reproducing place, can collect the public awareness of and responses to the content represented by the people gathered around the content reproducing place, thereby enabling to evaluate the effect of the content delivering system without enormous man-hours and expenses.

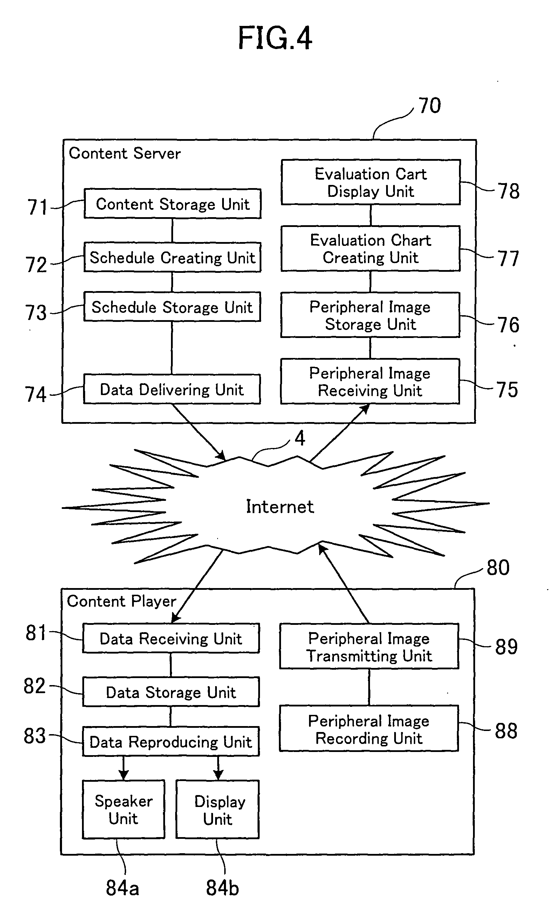

Referring to FIG 4 of the drawings, there is shown a fourth embodiment of content delivering system comprising a delivery server 70 for delivering content data indicative of a predetermined content and a schedule for reproducing the content; and a content player 80 for receiving the content data delivered by the delivery server 70, and reproducing the predetermined content in accordance with the schedule on the basis of the content data at a content reproducing place. In the content delivering system, the content player 80 is operative to record images in the vicinity of the content reproducing place; and transmit image information data indicative of the images thus recorded in the vicinity of the content reproducing place.

The delivery server 70 comprises a content storage unit 71 for storing therein content information data indicative of a predetermined content, a schedule creating unit 72 for creating a schedule for reproducing the content, a schedule storage unit 73 for storing therein schedule data indicative of the schedule created by the schedule creating unit 72, and a data delivering unit 74 for delivering content data indicative of the content and the schedule on the basis of the content information data stored in the content storage unit 71 and the schedule stored in the schedule storage unit 73 to the content player 80 through the internet 4.

The content player 80 comprises a data receiving unit 81 for receiving the content data delivered from the delivery server 70, a data storage unit 82 for storing therein the content data received by the data receiving unit 81, a data reproducing unit 83 for reproducing the content in accordance with the schedule on the basis of the content data stored in the data storage unit 82, a speaker unit 84a for audibly outputting the content and a display unit 84b for visually outputting the content. The speaker unit 84a and the display unit 84b are located at a content reproducing place such as for example an advertising tower. This means that the data reproducing unit 83 is operative to control the speaker unit 84a and the display unit 84b to have the speaker unit 84a audibly reproduce and the display unit 84b visually reproduce the content at the content reproducing place.

The content player 80 further comprises a peripheral image recording unit 88 for recording images of people in the vicinity of the content reproducing place, and a peripheral image transmitting unit 89 for transmitting image information data indicative of the images thus recorded by the peripheral image recording unit 88 to the delivery server 70 through the internet 4.

The delivery server 70 further comprises a peripheral image receiving unit 75 for receiving the image information data delivered by the peripheral image transmitting unit 89 of the content player 80, a peripheral image storage unit 76 for storing therein the image information data received by the peripheral image receiving unit 75, evaluation chart creating means constituted by an evaluation chart creating unit 77 for creating evaluation charts on the basis of the images indicated by the image information data stored in the peripheral image storage unit 76, and evaluation chart display means constituted by an evaluation chart display unit 78 for displaying the evaluation charts created by the evaluation chart creating unit 77. The images recorded by the peripheral image recording unit 88 in the vicinity of the content reproducing place have thereon a plurality of people divided into a plurality of status groups such as for example groups by gender, groups by age, groups by target category, or the like. The groups by gender include a group of men and a group of women. The groups by age include a group of people in teens, a group of people in twenties, a group of people in thirties, and/or the like. The groups by target category include a group of female senior high school students, female office workers, businessmen, and the like. The evaluation chart creating unit 77 is operative to create the evaluation charts by counting the number of people for each of the status groups for a plurality of time zones.

As will be seen from the above, there has been described only one content player 80 in the present embodiment of the content delivering system according to the present invention for the purpose of simplifying the description and assisting in understanding about the whole operation of the content delivering system. In reality, the content delivering system according to the present invention may comprise a plurality of content players.

The delivery server 70 has a central processing unit, hereinlater referred to simply as a "CPU", not shown in FIG 4 for controlling the whole operation of the delivery server 70. Similarly, the content player 80 has a central processing unit, hereinlater referred to simply as a "CPU", not shown in FIG. 4 for controlling the whole operation of the content player 80.

The following description will be directed to the process controlled by the CPUs of the delivery server 70 and the content player 80 to employ the method of controlling the content delivering system according to the present invention with no flowchart.

In the delivery server 70, the content storage unit 71 is operated to store therein content information data indicative of a content to be delivered to the content player 80. The content information data stored in the content storage unit 71 may be in the format of a still image file such as for example BMP, JPEG, or the like, and/or a moving image file such as for example MPEG or the like. The schedule creating unit 72 is operated to create a schedule for reproducing the content on the basis of the content data stored in the content storage unit 71. The term "schedule" herein used is intended to mean a time at which the content is reproduced. The schedule storage unit 73 is operated to store therein schedule data indicative of the schedule created by the schedule creating unit 72. The data delivering unit 74 is operated to deliver the content data through the internet 4. The content data is indicative of the content and the schedule for reproducing the content and created by the data delivering unit 74 on the basis of the content information data stored in the content storage unit 71 and the schedule stored in the schedule storage unit 73 before delivered to the content player 80.

In the content player 80, the data receiving unit 81 is operated to receive the content data delivered from the delivery server 70. The data storage unit 82 is operated to store therein the content data received by the data receiving unit 81. The data storage unit 82 may be constituted by, for example, a hard disk having storage areas. The data reproducing unit 83 is operated to reproduce the content in accordance with the schedule on the basis of the content data stored in the data storage unit 82. The content is audibly outputted by the speaker unit 84a and visually outputted by the display unit 84b at the content reproducing place.

Furthermore, in the content player 80, the peripheral image recording unit 88 is operated to record images of people in the vicinity of the content reproducing place. The peripheral image transmitting unit 89 is operated to transmit image information data indicative of the images thus recorded by the peripheral image recording unit 88 to the delivery server 70 through the internet 4.

Furthermore, in the delivery server 70, the peripheral image receiving unit 75 is operated to receive the image information data delivered by the peripheral image transmitting unit 89 of the content player 80. The peripheral image storage unit 76 is operated to store therein the image information data received by the peripheral image receiving unit 75. The evaluation chart creating means 77 is operated to create evaluation charts on the basis of the images indicated by the image information data stored in the peripheral image storage unit 76. More specifically, the images recorded by the peripheral image recording unit 88 in the vicinity of the content reproducing place have thereon a plurality of people divided into a plurality of status groups such as for example groups by gender, groups by age, groups by target category, or the like. The groups by gender include a group of men and a group of women. The groups by age include a group of people in teens, a group of people in twenties, a group of people in thirties, and/or the like. The groups by target category include a group of female senior high school students, female office workers, businessmen, and the like. The evaluation chart creating unit 77 is operated to create the evaluation charts by counting the number of people for each of the status groups for a plurality of time zones. The evaluation chart created by the evaluation chart creating unit 77 may include any chart such as for example a bar chart, a pie chart, a line graph, a table, or the like. As an example of the evaluation chart, a line graph is shown in FIG 8. The line graph shown in FIG 8 has a horizontal axis indicating the time zones and a vertical axis indicating the number of people for each of the status groups, e.g.., a group of female office workers designated by legend A, a group of business men designated by legend B, and a group of female senior high school students designated by legend C gathered in the vicinity of the content reproducing place within each of the time zones. The peripheral image display unit 78 is operated to display the evaluation charts created by the evaluation chart creating unit 77.

The content server may be owned by an advertising agency. Alternatively, the evaluation charts created by the evaluation chart creating unit 77 may be provided to the advertising agency as assessments of the public awareness of and responses to the content.

From the foregoing description, it is to be understood that the fourth embodiment of the content delivering system according to the present invention comprising a delivery server for delivering content data indicative of a predetermined content and a schedule for reproducing the content; and a content player for receiving the content data delivered by the delivery server, and reproducing the predetermined content in accordance with the schedule on the basis of the content data at a content reproducing place, and in which the content player is operative to record images in the vicinity of the content reproducing place; and transmit image information data indicative of the images thus recorded in the vicinity of the content reproducing place, and the delivery server includes an evaluation chart creating unit for creating evaluation charts on the basis of the character strings, can visually represent the public awareness of and responses to the content represented by the number of people gathered around the content reproducing place for each of status groups such as for example groups by gender, groups by age, groups by target category, or the like, thereby enabling to evaluate the effect of the content delivering system without enormous man-hours and expenses.

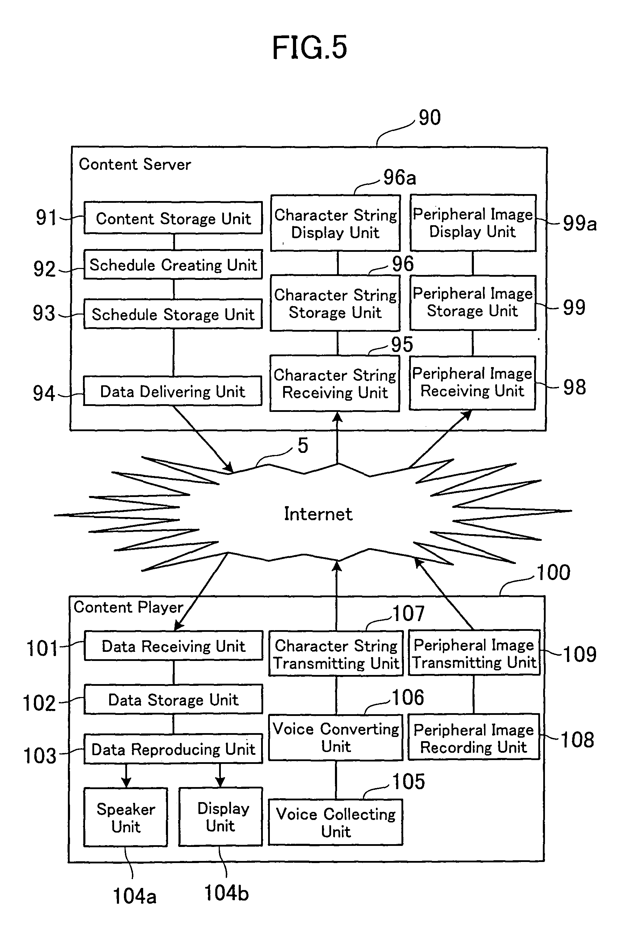

Referring to FIG. 5 of the drawings, there is shown a fifth embodiment of a content delivering system comprising a delivery server 90 for delivering content data indicative of a predetermined content and a schedule for reproducing the content; and a content player 100 for receiving the content data delivered by the delivery server 90, and reproducing the predetermined content in accordance with the schedule on the basis of the content data at a content reproducing place. In the content delivering system, the content player 100 is operative to collect voices and record images in the vicinity of the content reproducing place; and transmit voice information data indicative of the voices and image information data indicative of the images thus recorded in the vicinity of the content reproducing place.

The delivery server 90 comprises a content storage unit 91 for storing therein content information data indicative of a predetermined content, a schedule creating unit 92 for creating a schedule for reproducing the content, a schedule storage unit 93 for storing therein schedule data indicative of the schedule created by the schedule creating unit 92, and a data delivering unit 94 for delivering content data indicative of the content and the schedule on the basis of the content information data stored in the content storage unit 91 and the schedule stored in the schedule storage unit 93 to the content player 100 through the internet 5.

The content player 100 comprises a data receiving unit 101 for receiving the content data delivered from the delivery server 90, a data storage unit 102 for storing therein the content data received by the data receiving unit 101, a data reproducing unit 103 for reproducing the content in accordance with the schedule on the basis of the content data stored in the data storage unit 102, a speaker unit 104a for audibly outputting the content and a display unit 104b for visually outputting the content. The speaker unit 104a and the display unit 104b are located at a content reproducing place such as for example an advertising tower. This means that the data reproducing unit 103 is operative to control the speaker unit 104a and the display unit 104b to have the speaker unit 104a audibly reproduce and the display unit 104b visually reproduce the content at the content reproducing place.

The content player 100 further comprises a voice collecting unit 105 for collecting voices spoken by people in the vicinity of the content reproducing place, a voice converting unit 106 for converting the voices collected by the voice collecting unit 105 into character strings, a character string transmitting unit 107 for transmitting character string data indicative of the character strings converted by the voice converting unit 106 to the delivery server 90 through the intemet 5, a peripheral image recording unit 108 for recording images of people in the vicinity of the content reproducing place, and a peripheral image transmitting unit 109 for transmitting image information data indicative of the images thus recorded by the peripheral image recording unit 108 to the delivery server 90 through the intemet 5. The voice converting unit 106 constitutes voice converting means according to the present invention.

The delivery server 90 further comprises a character string receiving unit 95 for receiving character string data transmitted by the character string transmitting unit 107 of the content player 100, a character string storage unit 96 for storing therein the character string data, a character string display unit 96a for displaying the character strings on the basis of the character string data stored in the character string storage unit 96, a peripheral image receiving unit 98 for receiving the image information data delivered by the peripheral image transmitting unit 109 of the content player 100, a peripheral image storage unit 99 for storing therein the image information data received by the peripheral image receiving unit 98, and a peripheral image display unit 99a for displaying the images indicated by the image information data stored in the peripheral image storage unit 99. The character string display unit 96a constitutes character string display means according to the present invention. The peripheral image display unit 99a constitutes image display means of the delivery server according to the present invention.

As will be seen from the above, there has been described only one content player 100 in the present embodiment of the content delivering system according to the present invention for the purpose of simplifying the description and assisting in understanding about the whole operation of the content delivering system. In reality, the content delivering system according to the present invention may comprise a plurality of content players.

The delivery server 90 has a central processing unit, hereinlater referred to simply as a "CPU", not shown in FIG 5 for controlling the whole operation of the delivery server 90. Similarly, the content player 100 has a central processing unit, hereinlater referred to simply as a "CPU", not shown in FIG. 5 for controlling the whole operation of the content player 100.

The following description will be directed to the process controlled by the CPUs of the delivery server 90 and the content player 100 to employ the method of controlling the content delivering system according to the present invention with no flowchart.

In the delivery server 90, the content storage unit 91 is operated to store therein content information data indicative of a content to be delivered to the content player 100. The content information data stored in the content storage unit 91 may be in the format of a still image file such as for example BMP, JPEG, or the like, and/or a moving image file such as for example MPEG or the like. The schedule creating unit 92 is operated to create a schedule for reproducing the content on the basis of the content data stored in the content storage unit 91. The term "schedule" herein used is intended to mean a time at which the content is reproduced. The schedule storage unit 93 is operated to store therein schedule data indicative of the schedule created by the schedule creating unit 92. The data delivering unit 94 is operated to deliver the content data through the intemet 5. The content data is indicative of the content and the schedule for reproducing the content and created by the data delivering unit 94 on the basis of the content information data stored in the content storage unit 91 and the schedule stored in the schedule storage unit 93 before delivered to the content player 100.

In the content player 100, the data receiving unit 101 is operated to receive the content data delivered from the delivery server 90. The data storage unit 102 is operated to store therein the content data received by the data receiving unit 101. The data storage unit 102 may be constituted by, for example, a hard disk having storage areas. The data reproducing unit 103 is operated to reproduce the content in accordance with the schedule on the basis of the content data stored in the data storage unit 102. The content is audibly outputted by the speaker unit 104a and visually outputted by the display unit 104b at the content reproducing place.

Furthermore, in the content player 100, the voice collecting unit 105 is operated to collect voices spoken by people in the vicinity of the content reproducing place. The voice converting unit 106 is operated to convert the voices collected by the voice collecting unit 105 into character strings. The peripheral image recording unit 108 is operated to record images of people in the vicinity of the content reproducing place. The character string transmitting unit 107 is operated to transmit character string data indicative of the character strings converted by the voice converting unit 106 to the delivery server 90 through the internet 5. The peripheral image transmitting unit 109 is operated to transmit image information data indicative of the images thus recorded by the peripheral image recording unit 108 to the delivery server 90 through the internet 5.

Furthermore, in the delivery server 90, the character string receiving unit 95 is operated to receive the character string data transmitted by the character string transmitting unit 107 of the content player 100. The character string storage unit 96 is operated to store therein the character string data. The character string display unit 96a is operated to display the character strings on the basis of the character string data stored in the character string storage unit 96. The peripheral image receiving unit 98 is operated to receive the image information data delivered by the peripheral image transmitting unit 109 of the content player 100. The peripheral image storage unit 99 is operated to store therein the image information data received by the peripheral image receiving unit 98. The peripheral image display unit 99a is operated to display the images indicated by the image information data stored in the peripheral image storage unit 99. The character string display unit 96a constitutes character string display means according to the present invention. The peripheral image display unit 99a constitutes image display means of the delivery server according to the present invention. The character string display unit 96a and the peripheral image display unit 99a may be constituted by, for example, a monitor.

The content server may be owned by an advertising agency. Alternatively, the character strings converted from the voices such as for example "cool", "uncool", "lovely", "unpretty", or the like collected at the content reproducing place and the image information data recorded by the peripheral image recording unit 68 in the vicinity of the content reproducing place may be provided to the advertising agency as assessments of the public awareness of and responses to the content.

From the foregoing description, it is to be understood that the fifth embodiment of the content delivering system according to the present invention comprising a delivery server for delivering content data indicative of a predetermined content and a schedule for reproducing the content; and a content player for receiving the content data delivered by the delivery server, and reproducing the predetermined content in accordance with the schedule on the basis of the content data at a content reproducing place, and in which the content player is operative to collect voices and record images in the vicinity of the content reproducing place; and transmit voice information data indicative of the voices and image information data indicative of the images thus recorded in the vicinity of the content reproducing place, can collect the public awareness of and responses to the content represented by the people gathered around the content reproducing place and the voices such as "cool", "uncool", "lovely", "unpretty", or the like spoken by the people at the content reproducing place, thereby enabling to evaluate the effect of the content delivering system without enormous man-hours and expenses.

While it has been described in the above that the content player comprises voice converting means, the voice converting means may be included in the delivery server in place of the content server as long as at least one of the delivery server and the content player includes voice converting means in the content delivering system according to the present invention.

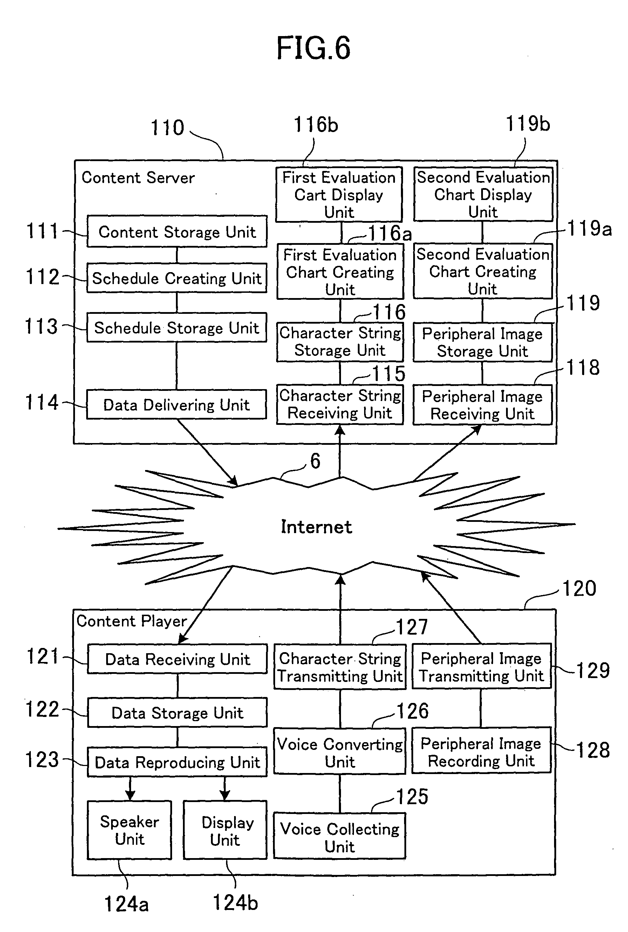

Referring to FIG. 6 of the drawings, there is shown a sixth embodiment of a content delivering system comprising a delivery server 110 for delivering content data indicative of a predetermined content and a schedule for reproducing the content; and a content player 120 for receiving the content data delivered by the delivery server 110, and reproducing the predetermined content in accordance with the schedule on the basis of the content data at a content reproducing place. In the content delivering system, the content player 120 is operative to collect voices and record images in the vicinity of the content reproducing place; and transmit voice information data indicative of the voices and image information data indicative of the images thus recorded in the vicinity of the content reproducing place.

The delivery server 110 comprises a content storage unit 111 for storing therein content information data indicative of a predetermined content, a schedule creating unit 112 for creating a schedule for reproducing the content, a schedule storage unit 113 for storing therein schedule data indicative of the schedule created by the schedule creating unit 112, and a data delivering unit 114 for delivering content data indicative of the content and the schedule on the basis of the content information data stored in the content storage unit 111 and the schedule stored in the schedule storage unit 113 to the content player 120 through the internet 6.

The content player 120 comprises a data receiving unit 121 for receiving the content data delivered from the delivery server 110, a data storage unit 122 for storing therein the content data received by the data receiving unit 121, a data reproducing unit 123 for reproducing the content in accordance with the schedule on the basis of the content data stored in the data storage unit 122, a speaker unit 124a for audibly outputting the content and a display unit 124b for visually outputting the content. The speaker unit 124a and the display unit 124b are located at a content reproducing place such as for example an advertising tower. This means that the data reproducing unit 123 is operative to control the speaker unit 124a and the display unit 124b to have the speaker unit 124a audibly reproduce and the display unit 124b visually reproduce the content at the content reproducing place.

The content player 120 further comprises a voice collecting unit 125 for collecting voices spoken by people in the vicinity of the content reproducing place, a voice converting unit 126 for converting the voices collected by the voice collecting unit 125 into character strings, a character string transmitting unit 127 for transmitting character string data indicative of the character strings converted by the voice converting unit 126 to the delivery server 110 through the internet 6, a peripheral image recording unit 128 for recording images of people in the vicinity of the content reproducing place, and a peripheral image transmitting unit 129 for transmitting image information data indicative of the images thus recorded by the peripheral image recording unit 128 to the delivery server 110 through the internet 6. The voice converting unit 126 constitutes voice converting means according to the present invention.

The delivery server 110 further comprises a character string receiving unit 115 for receiving character string data transmitted by the character string transmitting unit 127 of the content player 120, a character string storage unit 116 for storing therein the character string data, first evaluation chart creating means constituted by a first evaluation chart creating unit 116a for creating first evaluation charts on the basis of the character strings indicated by the character string data stored in the character string storage unit 116, first evaluation chart display means constituted by a first evaluation chart display unit 116b for displaying the first evaluation charts created by the first evaluation chart creating unit 116a, a peripheral image receiving unit 118 for receiving the image information data delivered by the peripheral image transmitting unit 129 of the content player 120, a peripheral image storage unit 119 for storing therein the image information data received by the peripheral image receiving unit 118, second evaluation chart creating means constituted by a second evaluation chart creating unit 119a for creating second evaluation charts on the basis of the images indicated by the image information data stored in the peripheral image storage unit 119, and second evaluation chart display means constituted by a second evaluation chart display unit 119b for displaying the second evaluation charts created by the second evaluation chart creating unit 119a.

The character strings indicated by the character string data stored in the character string storage unit 116 constitute a plurality of words such as for example "cool", "uncool", "lovely", "unpretty", or the like. The first evaluation chart creating unit 116a is adapted to create the first evaluation charts by counting the frequency of each of the words for a plurality of time zones.

The images recorded by the peripheral image recording unit 128 in the vicinity of the content reproducing place have thereon a plurality of people divided into a plurality of status groups such as for example groups by gender, groups by age, groups by target category, or the like. The groups by gender include a group of men and a group of women. The groups by age include a group of people in teens, a group of people in twenties, a group of people in thirties, and/or the like. The groups by target category include a group of female senior high school students, female office workers, businessmen, and the like. The second evaluation chart creating unit 119a is operative to create the second evaluation charts by counting the number of people for each of the status groups for a plurality of time zones.

As will be seen from the above, there has been described only one content player 120 in the present embodiment of the content delivering system according to the present invention for the purpose of simplifying the description and assisting in understanding about the whole operation of the content delivering system. In reality, the content delivering system according to the present invention may comprise a plurality of content players.

The delivery server 110 has a central processing unit, hereinlater referred to simply as a "CPU", not shown in FIG. 6 for controlling the whole operation of the delivery server 110. Similarly, the content player 120 has a central processing unit, hereinlater referred to simply as a "CPU", not shown in FIG. 6 for controlling the whole operation of the content player 120.

The following description will be directed to the process controlled by the CPUs of the delivery server 110 and the content player 120 to employ the method of controlling the content delivering system according to the present invention with no flowchart.

In the delivery server 110, the content storage unit 111 is operated to store therein content information data indicative of a content to be delivered to the content player 120. The content information data stored in the content storage unit 111 may be in the format of a still image file such as for example BMP, JPEG, or the like, and/or a moving image file such as for example MPEG or the like. The schedule creating unit 112 is operated to create a schedule for reproducing the content on the basis of the content data stored in the content storage unit 111. The term "schedule" herein used is intended to mean a time at which the content is reproduced. The schedule storage unit 113 is operated to store therein schedule data indicative of the schedule created by the schedule creating unit 112. The data delivering unit 114 is operated to deliver the content data through the internet 6. The content data is indicative of the content and the schedule for reproducing the content and created by the data delivering unit 114 on the basis of the content information data stored in the content storage unit 111 and the schedule stored in the schedule storage unit 113 before delivered to the content player 120.

In the content player 120, the data receiving unit 121 is operated to receive the content data delivered from the delivery server 110. The data storage unit 122 is operated to store therein the content data received by the data receiving unit 121. The data storage unit 122 may be constituted by, for example, a hard disk having storage areas. The data reproducing unit 123 is operated to reproduce the content in accordance with the schedule on the basis of the content data stored in the data storage unit 122. The content is audibly outputted by the speaker unit 124a and visually outputted by the display unit 124b at the content reproducing place.

Furthermore, in the content player 120, the voice collecting unit 125 is operated to collect voices spoken by people in the vicinity of the content reproducing place. The voice converting unit 126 is operated to convert the voices collected by the voice collecting unit 125 into character strings. The peripheral image recording unit 128 is operated to record images of people in the vicinity of the content reproducing place. The character string transmitting unit 127 is operated to transmit character string data indicative of the character strings converted by the voice converting unit 126 to the delivery server 110 through the intemet 6. The peripheral image transmitting unit 129 is operated to transmit image information data indicative of the images thus recorded by the peripheral image recording unit 128 to the delivery server 110 through the internet 6.

Furthermore, in the delivery server 110, the character string receiving unit 115 is operated to receive the character string data transmitted by the character string transmitting unit 127 of the content player 120. The character string storage unit 116 is operated to store therein the character string data. The first evaluation chart creating unit 116a is operated to create first evaluation charts on the basis of the character strings indicated by the character string data stored in the character string storage unit 116. The first evaluation chart display unit 116b is operated to display the first evaluation charts created by the first evaluation chart creating unit 116a. The peripheral image receiving unit 118 is operated to receive the image information data delivered by the peripheral image transmitting unit 129 of the content player 120. The peripheral image storage unit 119 is operated to store therein the image information data received by the peripheral image receiving unit 118. The second evaluation chart creating unit 119a is operated to create second evaluation charts on the basis of the images indicated by the image information data stored in the peripheral image storage unit 119. The second evaluation chart display unit 119b is operated to display the second evaluation charts created by the second evaluation chart creating unit 119a.

The character strings indicated by the character string data stored in the character string storage unit 116 constitute a plurality of words such as for example "cool", "uncool", "lovely", "unpretty", or the like. The first evaluation chart creating unit 116a is operated to create the first evaluation charts by counting the frequency of each of the words for a plurality of time zones. The first evaluation chart created by the evaluation chart creating unit 116a may include any chart such as for example a bar chart, a pie chart, a line graph, a table, or the like. As an example of the evaluation chart, a line graph is shown in FIG. 7. The line graph shown in FIG. 7 has a horizontal axis indicating the time zones and a vertical axis indicating the frequency of each of the words, e.g., "lovely" and "unpretty" spoken by people in the vicinity of the content reproducing place within each of the time zones.

The images recorded by the peripheral image recording unit 128 in the vicinity of the content reproducing place have thereon a plurality of people divided into a plurality of status groups such as for example groups by gender, groups by age, groups by target category, or the like. The groups by gender include a group of men and a group of women. The groups by age include a group of people in teens, a group of people in twenties, a group of people in thirties, and/or the like. The groups by target category include a group of female senior high school students, female office workers, businessmen, and the like. The second evaluation chart creating unit 119a is operated to create the second evaluation charts by counting the number of people for each of the status groups for a plurality of time zones. The evaluation chart created by the evaluation chart creating unit 119a may include any chart such as for example a bar chart, a pie chart, a line graph, a table, or the like. As an example of the evaluation chart, a line graph is shown in FIG. 8. The line graph shown in FIG. 8 has a horizontal axis indicating the time zones and a vertical axis indicating the number of people for each of the status groups gathered in the vicinity of the content reproducing place within each of the time zones. The line designated by legend A is intended to mean a group of female office workers, the line designated by legend B is intended to mean a group of business men, and the line designated by legend C is intended to mean a group of female senior high school students. The first evaluation chart display unit 116b and the second evaluation chart display unit 119b may be constituted by, for example, monitors.

The content server may be owned by an advertising agency. Alternatively, the first evaluation charts created by the first evaluation chart creating unit 116a and the second evaluation charts created by the second evaluation chart creating unit 119a may be provided to the advertising agency as assessments of the public awareness of and responses to the content.

From the foregoing description, it is to be understood that the sixth embodiment of the content delivering system according to the present invention comprising a delivery server for delivering content data indicative of a predetermined content and a schedule for reproducing the content; and a content player for receiving the content data delivered by the delivery server, and reproducing the predetermined content in accordance with the schedule on the basis of the content data at a content reproducing place, and in which the content player is operative to collect voices and record images in the vicinity of the content reproducing place; and transmit voice information data indicative of the voices and image information data indicative of the images thus recorded in the vicinity of the content reproducing place, and the delivery server includes a first evaluation chart creating unit for creating first evaluation charts on the basis of the character strings converted from the voices and a second evaluation chart creating unit for creating second evaluation charts on the basis of the images, can visually represent the public awareness of and responses to the content represented by the voices such as "cool", "uncool", "lovely", "unpretty", or the like spoken by the people at the content reproducing place, and the number of people gathered around the content reproducing place for each of status groups such as for example groups by gender, groups by age, groups by target category, or the like, thereby enabling to evaluate the effect of the content delivering system without enormous man-hours and expenses.

While it has been described in the above that the content player comprises voice converting means, the voice converting means may be included in the delivery server in place of the content server as long as at least one of the delivery server and the content player includes voice converting means in the content delivering system according to the present invention.

The many features and advantages of the invention are apparent from the detailed specification and thus it is intended by the appended claims to cover all such features and advantages of the invention which fall within the true spirit and scope thereof. Further, since numerous modifications and changes will readily occur to those skilled in the art, it is not desired to limit the invention to the exact construction and operation illustrated and described, and accordingly, all suitable modifications and equivalents may be resorted to, falling with the scope of the invention.

## Claims

1. A content delivering system, comprising:
a delivery server (10) for delivering content data indicative of a predetermined content and a schedule for reproducing said content; and
a content player (20) for receiving said content data delivered by said delivery server (10), and reproducing said predetermined content in accordance with said schedule on the basis of said content data at a content reproducing place, and in which
said content player (20) is operative to collect voices in the vicinity of said content reproducing place; and transmit voice information data indicative of said voices thus collected in the vicinity of said content reproducing place.

2. A content delivering system as set forth in claim 1, in which
At least one of said delivery server (10) and said content player (20) includes voice converting means (26) for converting said voices into character strings.

3. A content delivering system as set forth in claim 2, in which
said delivery server (10) includes character string display means (17) for displaying said character strings.

4. A content delivering system as set forth in claim 3, in which
said delivery server (30) includes evaluation chart creating means (37) for creating evaluation charts on the basis of said character strings.

5. A content delivering system as set forth in claim 4, in which
said delivery server (30) includes evaluation chart display means (38) for displaying said evaluation charts.

6. A content delivering system as set forth in claim 4, in which
said character strings constitute a plurality of words, and
said evaluation chart creating means (37) is operative to create said evaluation charts by counting the frequency of each of said words for a plurality of time zones.

7. A content delivering system, comprising:
a delivery server (50) for delivering content data indicative of a predetermined content and a schedule for reproducing said content; and
a content player (60) for receiving said content data delivered by said delivery server (50), and reproducing said predetermined content in accordance with said schedule on the basis of said content data at a content reproducing place, and in which
said content player (60) is operative to record images in the vicinity of said content reproducing place; and transmit image information data indicative of said images thus recorded in the vicinity of said content reproducing place.

8. A content delivering system as set forth in claim 7, in which
said delivery server (50) includes image display means (57) for displaying said images.

9. A content delivering system as set forth in claim 7, in which
said delivery server (70) includes evaluation chart creating means (77) for creating evaluation charts on the basis of said images.

10. A content delivering system as set forth in claim 9, in which
said delivery server (70) includes evaluation chart display means (78) for displaying said evaluation charts.

11. A content delivering system as set forth in claim 9, in which
said images include thereon a plurality of people divided into a plurality of status groups, and
said evaluation chart creating means (77) is operative to create said evaluation charts by counting the number of people for each of said status groups for a plurality of time zones.

12. A content delivering system, comprising:
a delivery server (90) for delivering content data indicative of a predetermined content and a schedule for reproducing said content; and
a content player (100) for receiving said content data delivered by said delivery server (90), and reproducing said predetermined content in accordance with said schedule on the basis of said content data at a content reproducing place, and in which
said content player (100) is operative to collect voices and record images in the vicinity of said content reproducing place; and transmit voice information data indicative of said voices thus collected and image information data indicative of said images thus recorded in the vicinity of said content reproducing place.

13. A content delivering system as set forth in claim 12, in which
said delivery server (90) includes voice converting means (95) for converting said voices into character strings, character string display means (96a) for displaying said character strings, and image display means (99a) for displaying said images.

14. A content delivering system as set forth in claim 13, in which
said delivery server (110) includes first evaluation chart creating means (116a) for creating first evaluation charts on the basis of said character strings, and second evaluation chart creating means (119a) for creating second evaluation charts on the basis of said images.

15. A content delivering system as set forth in claim 14, in which
said character strings constitute a plurality of words,
said images include thereon a plurality of people divided into a plurality of status groups,
said first evaluation chart creating means (116a) is operative to create said first evaluation charts by counting the frequency of each of said words for a plurality of time zones, and
said second evaluation chart creating means (119a) is operative to create said second evaluation charts by counting the number of people for each of said status groups for a plurality of time zones.
